# EUROPEAN PATENT APPLICATION

(11) **EP 1 638 267 A1**
(43) Date of publication of application: **22.03.2006**
(21) Application number: 04735242.2
(22) Date of filing: 28.05.2004
(51) Int. Cl.: H04L 12/56, H04L 29/08, H04L 1/16

(54) **METHOD OF RELEASING TRANSMITTED DATA BY MEANS OF RECEPTION OR TRANSMISSION RECOGNITION**

(30) Priority: 11.06.2003 ES 200301372
(71) Applicant: Diseno de Sistemas en Silicio S.A., 46980 Paterna (Valencia) (ES)
(72) Inventor: BLASCO CLARET, Jorge, Vicente, E-46020 Valencia (ES); RIVEIRO INSUA, Juan Carlos, E-46019 Valencia (ES); CARRERAS ARENY, Judit, E-46008 Valencia (ES)
(74) Representative: Ungria Lopez, Javier
(86) International application number: PCT/ES2004/000242
(87) International publication number: WO 2004/109990

(57) **Abstract**

Where the data sent to different users is stored and where each communication has an acknowledgement in transmission configured in which a release signal for the data sent is generated at the end of the transmission, or in reception in which confirmation is awaited of acknowledgement of the receiver prior to releasing the data.

It is **characterized by** the distinction between the transmission and reception time and by taking decisions to retransmit data or release it due to lack of acknowledgement in reception knowing that the user has had the opportunity to send the acknowledgement during the time assigned to the receiver.

## Description

### OBJECT OF THE INVENTION

As stated in the title of this specification, the present invention reters to a method of releasing transmitted data by means of reception or transmission recognition, and is aimed at multiuser telecommunication systems with digital transmission of data multipoint to multipoint. The procedure of the invention provides for the release of transmitted data packets in the event or a received acknowledgement signal referring to a packet pending to be released, Or in the same way it provides for the release of transmitted data packets when the acknowledgement is made at the end of the transmission if this type of acknowledgement is activated.

This invention is applicable to a multiuser system in which it is known, at the moment of reception, which user is going to transmit at any moment, being able to decide to retransmit in the event of a lack of reception of an acknowledgement at the end of the reception time.

### BACKGROUND TO THE INVENTION

In the sending of information between telecommunications stations, there must normally exist some mechanism by which the transmitter station knows if the packet or packets being sent have arrived at the receiver correctly, since the channel can introduce a range of errors preventing the correct reception of the information sent. Once the transmitter knows that the information sent has been received properly, it can then release the memory used in the transmitter or retransmit the packet if it has not been received correctly.

In the majority of telecommunication systems, it is necessary to carry out a process of acknowledgement in reception of the packet sent to a destination. Thanks to this process, the memory can be released with the security that the destination has correctly received that packet. This process can also be carried out in transmission, generating the release signal once the packet has been transmitted, though this procedure does not imply that the receiver has properly gathered the information sent.

In the state of the art, the use is known of multipoint to multipoint communication systems where acknowledgement in reception is used for the release of packets, as this appears in the book by Andrew S. Tannenbaum "Computer Networks", published by Prentice Hall. As stated in that publication, in the event of a lack of acknowledgement in reception, the system very often waits for a counter to expire in order to decide to retransmit the unconfirmed packet or packets. The present invention plans to use the knowledge which communications systems have of which user is going to transmit at each moment in order to decide whether the acknowledgement in reception ought to have been received in order to make a retransmission of the non received data, thus making the system much more flexible and eliminating the need for counters. The procedure of the invention also provides for the generation of a release signal in the event of an acknowledgement in transmission or an acknowledgement in reception, making the system reusable.

The present invention presents a procedure which permits acknowledgement of transmitted data in transmission or in reception, in which the sets of equipment know it the equipment from which an acknowledgement is expected is going to be able to transmit that acknowledgement or not, in other words, if it is going to have a transmission Lime or not. Thanks to this procedure the decision can be taken to release due to acknowledgement, or to retransmit or release without waiting for the arrival of an acknowledgement, bearing in mind that a lack of acknowledgement when it ought to have been received implies a non-active destination or a channel between the two that is overly unfavourable -

The main advantage of this procedure is the improvement in the memory management of a telecommunications system and its simplicity, bearing in mind that the acknowledgement in transmission or in reception of the transmitted data is done by means of generating the same signal for release or retransmission of packets.

### DESCRIPTION OF THE INVENTION

In order to achieve the objectives and avoid the drawbacks stated above, the invention consists of a procedure for releasing transmitted data by means of acknowledgement in reception or in transmission, in which there exists a plurality of user equipment connected by means of links, and where a time division of the channel is performed, in such a way that any user has a time in which he can transmit (transmission time) and a time in which he can receive (reception time) and where all the users are able to communicate among each other using the links, with any user being able to send and receive information to and from any of the other users of the system. The procedure is characterized in that it comprises the stages of storing the data sent in each communication selectively pending acknowledgement in transmission, in which a release signal is generated for the data sent when the transmission ends, or in reception, in which confirmation is awaited of acknowledgement from the receiver in order to release the data that was sent; configuring a plurality of links from one user towards other users, with transmission and acknowledgement configurations that are selectively different or coincident for each of the links; selectively configuring in each link between users an acknowledgement in transmission or an acknowledgement in reception, the configuration being independent for each link; carrying out the acknowledgement selectively in transmission, reception or a combination of both by means of a single release signal in the user which has the information pending acknowledgement, in order to release the stored data; selectively generating a retransmission signal for data pending acknowledgement in reception when that acknowledgement is not received within the expected period, and retransmitting that data in any of the following transmission periods, depending on the acknowledgement configuration established for each link. These stages serve to guarantee the generation of release or retransmission signals with regard to the data stored in the transmission time pending acknowledgement prior to commencing a new transmission time.

The procedure of the invention is also characterized in that, in a system where a transmission has been carried out by a link of a user (A) to a user (B) who has the acknowledgement configured in reception, where (A, B) are any users, all the packets previously sent and which are pending release are retransmitted once a reception time has passed where the user (B) has had the opportunity to send an acknowledgement to the user (A) and the user (A) has not received it. The invention also provides for the user (A) to cease transmitting to user (B) selectively during a certain period of time or for good when a certain number of reception times have passed, the said number of times being previously configured in the user (A), where, in that period of reception times, the user (B) has had the opportunity to send an acknowledgement to the user (A) and the user (A) has not received it.

Moreover, in a system where a transmission has been carried out by a link of a user (A) to a user (C) with whom it has the acknowledgement configured in transmission, where (A, C) are any users, the procedure is characterized in that a release signal is generated in order to release a data packet sent by that link at the end of the transmission of a packet to the user (C) to whom the data was sent. In the present invention, this form of acknowledgement in transmission has been referred to as acknowledgement in transmission without accumulation.

Another possibility is that, in a system where a transmission has been carried out hy a link of a user (A) to a user (D) with whom it has the acknowledgement configured in transmission, where (A, D) are any users, the procedure generates a single release signal in order to release at the end of the transmission time all the packets that have been transmitted by a link from a user (A) to another user (D). In the present invention, this form of acknowledgement in transmission has been referred to as acknowledgement in transmission with accumulation.

Finally, the procedure is also characterized in that, in transmission, data packets are aggregated together before sending them via the corresponding link, and a numerical identifier is selectively added to each packet separately or to the aggregate of packets, while in reception the aggregate of packets is segregated in order to obtain the initial packets, and the acknowledgement process is done on the basis of the information contained in the numerical identifier associated with each packet or with the set of them.

Below, in order to facilitate a better understanding of this specification and forming an integral part thereof, some figures are included in which the object of the invention has been represented in a manner that is illustrative rather than limiting.

### BRIEF DESCRIPTION OF THE FIGURES

Figure 1. Represents a system where a user wishes to transmit to others and the configuration of acknowledgements is different for each of them.
Figure 2.- Represents the decision taking instants from the point of view of the transmitting user.

### DESCRIPTION OF AN EMBODIMENT OF THE INVENTION

Given below is a description of an example of the invention, making reference to the numbering adopted in the figures.

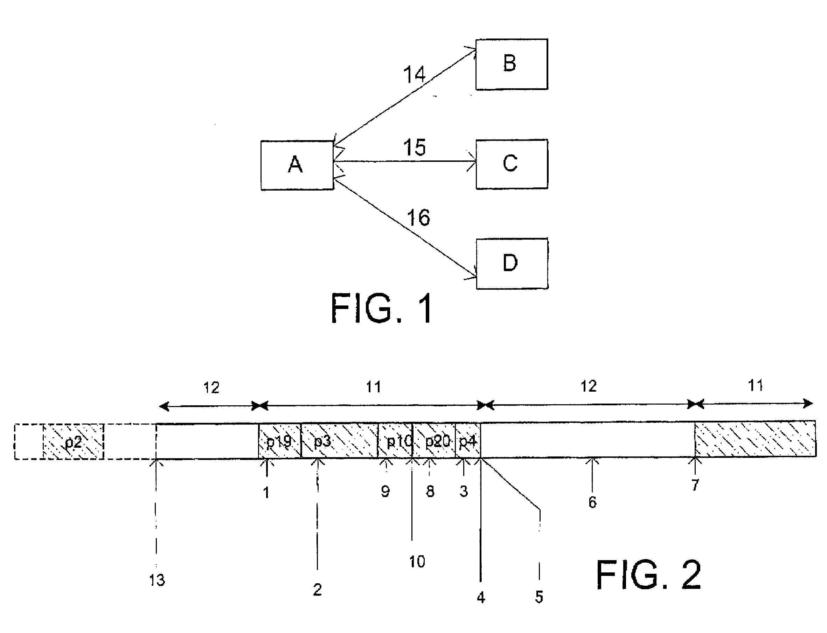

In this example of embodiment, a digital transmission system of data, multipoint to multipoint and two-way, is presented in which a set of user equipment communicates with various sets of user equipment by means of a series of links. Hereinafter, equipment A, B, C and D are any of the sets of user equipment of the system. The transmitter equipment (equipment A) has a link (14) configured with equipment B with acknowledgement in reception, a link (15) with equipment C with acknowledgement in transmission without accumulation, already described in the section on description of the invention, and a link (16) with equipment D with acknowledgement in transmission with accumulation. This example is represented in figure 1.

Usually, in communications systems, when a packet is transmitted, said packet is stored and remains pending acknowledgement for being finally released, as was mentioned in the section on background of the invention. when more than one packet is transmitted to the same user in the same transmission time, the acknowledgement of the last one transmitted ought to be received. If the receiver receives an acknowledgement of a packet which is not the last one transmitted, this implies that it has to retransmit the packets starting from the one that was acknowledged (the acknowledged not being included in that retransmission) but if an acknowledgement is received in reception of a packet which is the last one received, this means that all the packets pending acknowledgement have to be released.

In this procedure, "acknowledgement in transmission" indicates that at the end of the transmission of a packet to a user, an acknowledgement of the packet is produced which generates a release signal associated with that packet. Thanks to it, the packet is released immediately or that release signal is stored for being used later on.

Moreover, "acknowledgement in reception" indicates that at the end of the transmission the users from whom acknowledgement is waiting to be received in reception, via the appropriate links, are saved in such a way that, at the end of reception, it is decided to retransmit in the transmission time all the packets that are pending acknowledgement and have not been acknowledged and directed to the users from whom an acknowledgement ought have been received.

Described in figure 2 by means of a times diagram are the actions occurring in an example of transmission and reception in the system from the point of view of a set of user equipment. The reference (11) indicates the time during which a transmission is made, and the reference (12) the time used for reception. The reference (1) indicates the instant in which a transmission is made to user D of a packet p19, (2) represents a transmission to user B of a packet p3, (9) indicates a transmission to user C of a packet p10. The reference (10) represents the instant in which the acknowledgement in transmission of packet p10 towards user C is attended to, and reference (8) indicates a transmission to user D of a packet p20. The packets p19, p3, p10 and p20 can be simple packets or multiple packets aggregated with the same identifier.

Moreover, reference (3) indicates a transmission to user B of a packet p4, (4) represents the moment in which all the acknowledgements in transmission from user D of packets p19 and p20 are attended to, and (5) represents the moment in which it is known that in the following reception time an acknowledgement is going to be received in reception from user B and which in this example coincides with the time seL as (4). Also, the reference (6) indicates the instant in which the acknowledgement is received in reception from user B and (7) indicates when it is confirmed that an acknowledgement has been received in reception from user B.

That figure 2 shows the behaviour at a certain instant, (13), of the normal functioning of a system using the procedure of the invention. In that moment (13) of the communication a packet identified as p2 is the last one correctly received by equipment B coming from equipment. A, so that during the transmission time of A packets p3 and p4 arc sent to B. During the transmission time of B (to equipment. A by means of link 14), one of the following situations can occur: an acknowledgement is received in reception of packet p4 and so packet p3 and p4 arc released and in the following transmission time (11) of A a new packet p5, not represented, will be transmitted if it exists; an acknowledgement is received in reception of packet p3 due to which p3 is released and in the following transmission time of A packet p4 will be transmitted; an acknowledgement is received in reception of packet p2 due to which in the following transmission time of A packet p3 will be transmitted and, if there still exist sufficient transmission time remaining, packet p4; or no acknowledgement is received in reception due to which at the end of the reception time it will be decided to again transmit packet p3 and, if there still exists sufficient transmission time remaining, packet p4.

During the transmission time of A, packet p10 will also be transmitted to C. At the moment in which the transmission of packet p10 ends, as user C is configured with acknowledgement in transmission without accumulation, a release signal is generated and the packet p10 is released.

During the transmission time of A, packet p19 is transmitted to D. At the moment in which the transmission of packet p19 ends, and owing to the fact that user D is configured with acknowledgment in transmission with accumulation, the release signal for packet p19 is accumulated. In the same Transmission time of A, packet p20 is also transmitted to D, generating a release signal for packet p20 which is accumulated. At the end of the transmission time of A, the release signals or user D are looked at and packets p19 and p20 axe released.

## Claims

1. **METHOD OF RELEASING TRANSMITTED DATA BY MEANS OF RECEPTION OR TRANSMISSION RECOGNITION,** there existing a plurality of user equipment connected by means of links, where a time division of the channel is performed, in such a way that any user has a time in which he can transmit (transmission time) and a time in which he can receive (reception time) and where all the users are able to communicate among each other using the links, with any user being able to send and receive information to and from any of the other users of the system; **characterized in that** the procedure comprises the following stages:
- storing the data sent in each communication pending acknowledgement selectively in transmission, in which a release signal is generated for the data sent at the end of the transmission, and selectively in reception, in which confirmation is awaited of acknowledgement from the receiver in order to release the data that was sent;
- configuring a plurality of links from one user towards other users, with transmission and acknowledgement configurations selected among different configurations and coincident configurations for each of the links;
- configuring in each link between users an acknowledgement selected between an acknowledgement in transmission and an acknowledgement in reception, the configuration being independent for each link;
- carrying out the acknowledgement selectively in transmission, reception or a combination of both by means of a single release signal in the user which has the information pending acknowledgement, in order to release the stored data; and
- selectively generating a retransmission signal for data pending acknowledgement in reception when that acknowledgement is not received within the expected period, and retransmitting that data in any of the following transmission periods, depending on the acknowledgement configuration used for the link used for the transmission;
in order to guarantee the generation of release or retransmission signals with regard to the data stored in the transmission time pending acknowledgement prior to commencing a new transmission time.

2. **METHOD OF RELEASING TRANSMITTED DATA BY MEANS OF RECEPTION OR TRANSMISSION RECOGNITION,** according to claim 1, in a system where a transmission has been carried out by a link of a user (A) to a user (B) who has the acknowledgement configured in reception, where (A, B) are any users, **characterized in that** all the packets previously sent and which are pending release are retransmitted once a reception time has passed where the receiver user (B) has had the opportunity to send an acknowledgement to the transmitter user (A) and the transmitter user (A) has not received it.

3. **METHOD OF RELEASING TRANSMITTED DATA BY MEANS OF RECEPTION OR TRANSMISSION RECOGNITION,** according to claim 1, in a system where a transmission has been carried out by a link of a user (A) to a user (B) who has the acknowledgement configured in reception, where (A, B) are any users, **characterized in that** the transmitter user (A) ceases transmitting to the receiver user (B) selectively during a certain period of time and selectively for good when a certain number of reception times have passed, the said number of times being previously configured in Lhe transmitter user (A), where the receiver user (B) has had the opportunity to send an acknowledgement to the transmitter user (A) and this user (A) has not received it.

4. **METHOD OF RELEASING TRANSMITTED DATA BY MEANS OF RECEPTION OR TRANSMISSION RECOGNITION,** according to claim 1, in a system where a transmission has been carried out by a link of a user (A) to a user (C) with whom it has the acknowledgement configured in transmission, where (A, C) are any users, **characterized in that** an acknowledgement in transmission without accumulation is made which consists of generating a release signal for releasing a data packet sent by that link at the end of the transmission of a packet to the user (C) to whom the data was sent.

5. **METHOD OF RELEASING TRANSMITTED DATA BY MEANS OF RECEPTION OR TRANSMISSION RECOGNITION,** according to claim 1, in a system where a transmission has been carried out by a link of a user (A) to a user (D) with whom it has the acknowledgement configured in transmission, where (A, D) are any users, **characterized in that** an acknowledgement in transmission with accumulation is made which consists of generating a single release signal in order to release at the end of the transmission time all the packets that have been transmitted by a link from a user (A) to another user (D) .

6. **METHOD OF RELEASING TRANSMITTED DATA BY MEANS OF RECEPTION OR TRANSMISSION RECOGNITION,** according to claim 1, **characterized in that**, in transmission, data packets are aggregated together sending them via the corresponding link, and a numerical identifier is selectively added to each packet separately and selectively to the aggregate of packets, and in reception said aggregate of packets is segregated in order to obtain the initial packets, and the acknowledgement process is done on the basis of the information contained in the numerical identifier selectively associated with each packet and selectively with the set of packets.
